# EUROPEAN PATENT SPECIFICATION

(11) **EP 1 628 855 B1**
(45) Date of publication and mention of the grant of the patent: **06.01.2010**
(21) Application number: 04734315.7
(22) Date of filing: 21.05.2004
(51) Int. Cl.: B60P 1/48

(54) **STACKABLE SKIPS**
STAPELBARE MÜLLBEHÄLTER
BENNES EMPILABLES

(30) Priority: 22.05.2003 ZA 200303980
(43) Date of publication of application: 01.03.2006
(73) Proprietor: TRACE, James Crispian Garth, Johannesburg, 2193 Gauteng Province (ZA)
(72) Inventor: TRACE, James Crispian Garth, Johannesburg, 2193 Gauteng Province (ZA); RIVETT-CARNAC, John Edward, 2193 Gauteng Province (ZA)
(74) Representative: Campbell, Arlene
(86) International application number: PCT/IB2004/001651
(87) International publication number: WO 2004/103768

(56) References cited:
- DE-A- 3 110 112
- DE-U- 7 505 360
- DE-U- 20 213 200
- GB-A- 1 367 704
- GB-A- 1 429 503

## Description

THIS INVENTION relates to disposing of material such as waste which includes refuse and rubble. More particularly it relates to a method of disposing of waste, to a waste disposal bin, to a waste disposal vehicle, and to a waste disposal system.

It is expected that the invention will find particularly advantageous application in the context of waste. It is, however, to be appreciated that the invention can also be used in the context of other materials such as, for example, sand, broken glass, or scrap metal.

In accordance with one aspect of the invention, there is provided a method of disposing of waste, which includes conveying two bins, both being substantially filled with waste, on a load bed of a vehicle in a stacked manner, so that the bins are arranged one on top of the other, there thus being a lower bin and an upper bin, with a centre of the upper bin being positioned between a centre of the lower bin and a cab of the vehicle.

As will be appreciated, the centre of the upper bin will be above the centre of the lower bin. Naturally, as will further be appreciated, more than two bins could possibly be conveyed. Clearly, two empty bins may also be conveyed in a stacked manner, as disclosed in DE 31 10 112.

The method may also include the preliminary step of lifting the two bins simultaneously on to the load bed of the vehicle. Instead, the two bins may be separately loaded on to the load bed of the vehicle, the lower bin first being lifted on to the load bed of the vehicle, and the upper bin thereafter being lifted on to the lower bin.

The method may, when the two bins are simultaneously lifted on to the load bed of the vehicle, also include the further preliminary step of locking the bins together one way to do this is disclosed in DE 202 13 200 U1 prior to lifting thereof on to the load bed of the vehicle, and the further step of retaining the lower bin in position on the load bed when the bins are on the load bed. Instead, the method may include locking the bins together when they have been lifted on to the load bed of the vehicle, and retaining the lower bin in position on the load bed.

The method may include simultaneously tipping the lower bin and the upper bin, while they are stacked one on top of the other, to discharge waste contained therein. Instead, the method may include tipping the upper bin to discharge waste contained therein, the lower bin remaining on the load bed.

The method may further include offloading the bins simultaneously, while they are stacked one on top of the other, from the load bed of the vehicle. Instead, the method may include offloading the bins separately from the load bed of the vehicle, the upper bin being offloaded first, and the lower bin being offloaded thereafter.

In accordance with another aspect of the invention, there is provided a waste disposal bin which includes:
stacking formations for supporting the bin on a similar bin in a stacked manner; and
locking formations for locking the bin to a similar bin on which it is supported and for resisting relative vertical movement, and relative horizontal movement, in a defined direction, of stacked bins, the locking formations of respective bins being arranged to engage one another by sliding movement of one bin on another bin below it.

Said defined direction can, as will be appreciated, be either a forward direction or a backward direction.

The bin may include a first set of locking formations provided adjacent a floor of the bin for locking it to a similar bin that is below it, and a second set of locking formations provided adjacent a top of the bin for locking a similar bin to it that is above it

The stacking formations may be provided adjacent the floor of the bin and also perform a locking function, the stacking formations thus providing the first set of locking formations.

The locking formations may comprise complementary locking pins and hooked members.

The first set of locking formations may be defined by the locking pins, the second set of locking formations being defined by the hooked members, with the locking pins and the hooked members being relatively spaced along a length of the bin such that, when two bins are stacked one on top of the other, a center of an upper one of the bins is longitudinally unaligned with the center of a lower one of the bins.

The locking pins may project laterally outwardly from sides of the bin, being movable between extended operative positions and retracted inoperative positions for enabling nesting of one bin in another empty bin, the hooked members projecting upwardly from the top of the bin.

At least some of the hooked members may be provided with ancillary locking formations engageable by complementary locking formations of a bin displacing arrangement for resisting relative movement of stacked bins in a direction opposite to the defined direction.

The bin may also include lifting formations by means of which it can be lifted for loading, unloading and tipping. The lifting formations may be in the form of lifting pins projecting laterally outwardly from sides of the bin.

The bin may further include spacers adjacent a floor of the bin and projecting laterally outwardly from the bin for engaging another bin on which it is supported, laterally to space the bins relative to each other.

In accordance with a further aspect of the invention, there is provided a waste disposal vehicle which includes a load bed on which two stacked bins may be received, a displacing mechanism including two laterally spaced lifting arms located on sides of the load bed and pivotable about a pivot axis transverse to the load bed, and a coupling member for coupling two bins as hereinbefore described, that are stacked one on top of the other, to the displacing mechanism which is pivotable between a loading position in which free ends of the arms project away from a cabin of the vehicle and a transport position in which their free ends project towards the cabin, the coupling member including at least one elongated flexible element arrangement connected to one connection formation for connection to the bins, a first of said limbs having a length such that when the bins are on the load bed and its connection formation is secured to the locking pin closest to the cabin of an upper of the two bins, and with the displacing mechanism in its transport position, said first limb is taut, to retain the upper bin in position relative to a lower bin below it.

The connection formation of the first limb may be in the form of a hook for hooking on to one of the lifting formations of the bins during loading and offloading of the bins on to and from the load bed, and for hooking on to the locking pin closest to the cabin of the upper bin during tipping and transportation of the bins, the hook being provided with a locking formation for engaging the ancillary locking formation of the hooked member associated with the locking pin on to which the hook is hooked, with the connection formation of a second of the limbs being in the form of a lug for connection to one of the lifting formations of the bins during displacement and transport of the bins.

The vehicle may include an arm connection formation for connecting the elongated flexible element arrangement to the arm.

The elongate flexible element may be in the form of two chains connected together by the arm connection formation.

In accordance with yet another aspect of the invention, there is provided a waste disposal system which includes a waste disposal vehicle having a load bed and a pair of bins as hereinbefore described stacked thereon.

In accordance with still another aspect of the invention, there is provided a waste disposal system which includes a waste disposal vehicle as hereinbefore described in combination with a plurality of bins, at least one of which is as hereinbefore described.

The invention is now described, by way of example, with reference to the accompanying diagrammatic drawings.

In the drawings,
Figure 1 shows, in three-dimensional view, a waste disposal bin in accordance with the invention;
Figure 2 shows, in side view, two bins in accordance with the invention stacked one on top of the other on a load bed of a waste disposal vehicle, shown partially, also in accordance with the invention, the waste disposal vehicle in combination with the bins forming a waste disposal system in accordance with the invention ;
Figure 3 shows, in side view, the bins of Figure 1 being tipped by means of a displacing mechanism, forming part of the vehicle in accordance with the invention;
Figure 4 shows, in three-dimensional view, another embodiment of a bin in accordance with the invention;
Figure 5 shows, in side view, two of the bins shown in Figure 4 in stacked relationship being tipped by means of a variant embodiment of the displacing mechanism;
Figure 6 shows, in side view, two of the bins shown in Figure 4 in stacked relationship being tipped by means of yet a further embodiment of the displacing mechanism;
Figure 7 shows, in three-dimensional view, a further embodiment of a bin in accordance with the invention;
Figure 8 shows, in side view, two of the bins shown in Figure 7 in stacked relationship being tipped by means of still a further embodiment of the displacing mechanism; and
Figure 9 shows, in three-dimensional view, a connection formation forming part of the displacing mechanism shown in Figure 8.

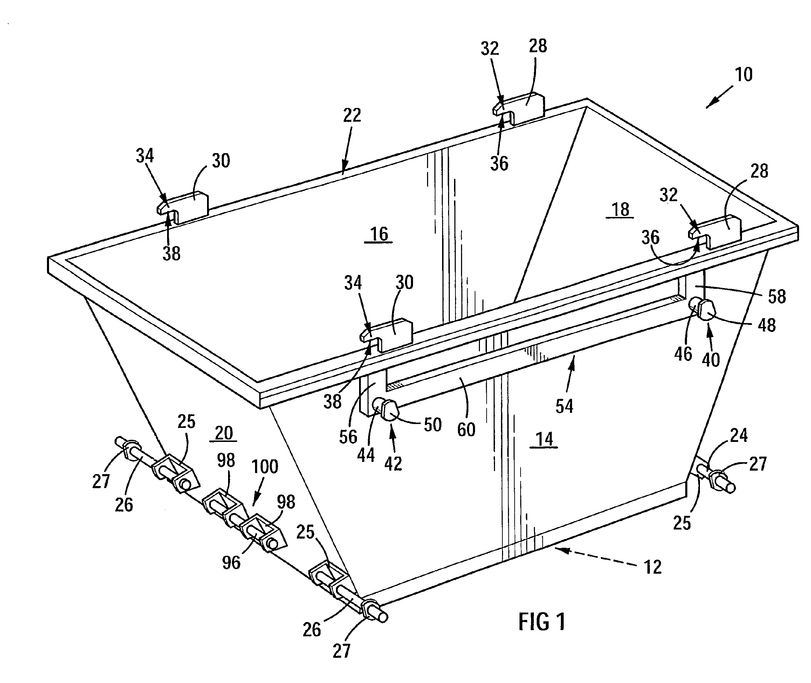

With reference to Figures 1, 2 and 3 of the drawings, a waste disposal bin in accordance with the invention is generally indicated by reference numeral 10. The bin 10 is of steel construction and includes a rectangular flat floor 12, flat opposing side walls 14, 16, and a flat front wall 18 and a flat rear wall 20 protruding upwardly from the floor 12. The front wall 18 and the rear wall 20 are respectively forwardly upwardly and rearward upwardly slanted so as to give the bin an inverted frusta-conical outline in side view. Upper edges of the respective walls 14, 16, 18, 20 provide the bin with an angular top edge 22 which projects slightly operatively outwardly.

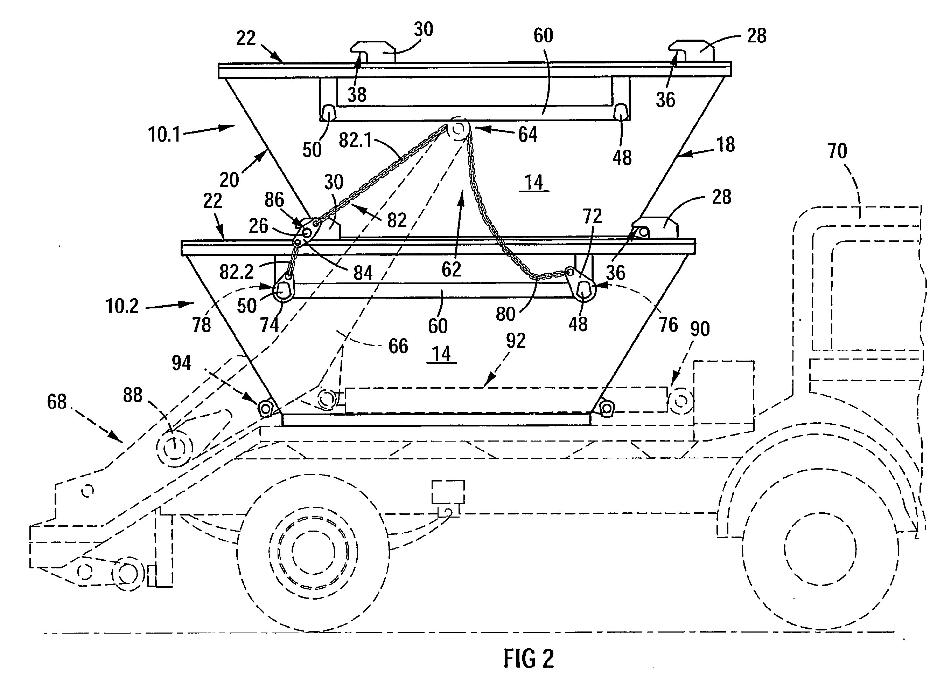

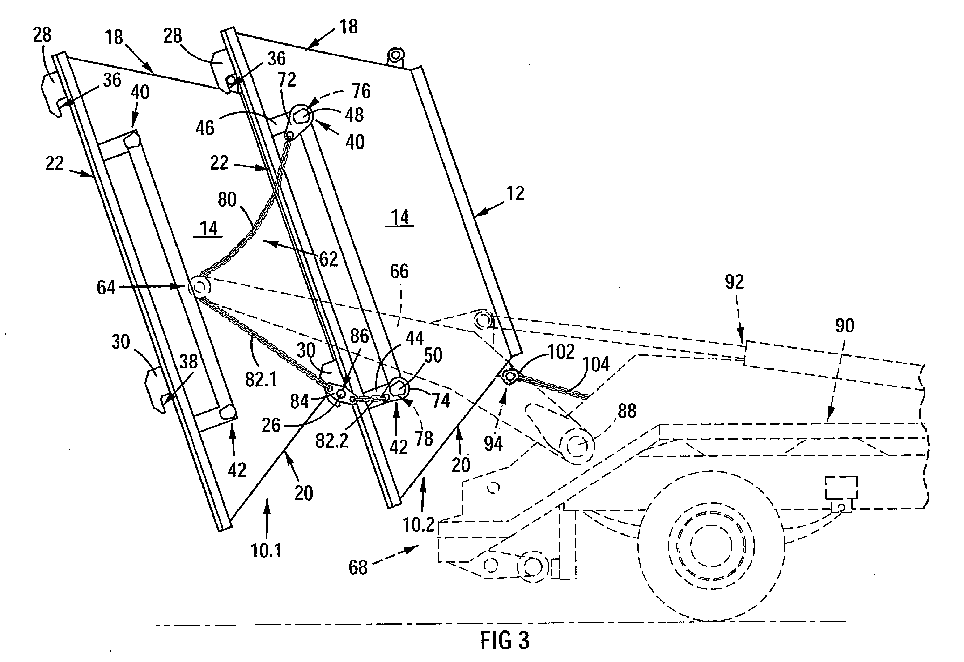

The bin 10 includes stacking formations in the form of locking pins 24, 26 respectively fast with the front wall 18 and the rear wall 20 and located proximate corners of the floor 12. The pins 24, 26 project laterally outwardly from the bin 10. The pins 24, 26 are spaced from and parallel with the front and rear walls 18, 20 and fast therewith by means of brackets 25. The locking pins 24, 26 constitute a first set of locking formations of the bin 10. In use, as can be seen in Figures 2 and 3, two of the bins 10 can be stacked one on top of the other.

For clarity, when the bins are stacked, a top bin will hereinafter be referred to as the upper bin 10.1 and the other as the lower bin 10.2. Also, so as not to clutter-up the drawings, selected reference numerals only are shown in Figures 2, 3, 5 and 8 of the drawings.

In an embodiment not shown, the pins 24, 26 may be slid able to retracted inoperative positions in which they do not, project from the bin 10, to permit nesting of one bin 10 in another empty bin 10.

When stacked, the pins 24, 26 of the upper bin 10.1 engage the top edge 22 of the lower bin 10.2 and rest thereon. On account of the positioning of the pins 24, 26 on the upper bin 10.1, only a lower part of the bin 10.1 enters the lower bin 10.2. With the lower part of the upper bin 10.1 being received within the lower bin 10.2, the two bins 10.1, 10.2 are thus locked against excessive relative transverse movement. Further, on account of the bin 10 having a top area greater than its floor area, the particular stacking configuration allows access into an interior of the lower bin 10.2.

The bin 10 further includes a second set of locking formations in the form of hooked members 28, 30 located on upper edges, forming part of the top edge 22, of the side walls 14, 16. A front hooked member 28 and a rear hooked member 30 is secured to the upper edges of each of the side walls 14, 16. Each of the hooked members 28, 30 is roughly L-shaped and of substantially thick metal construction and is, typically, welded to the top edge 22. The hooked members 28, 30 have operatively rearward protruding nose sections 32, 34 and respectively define between themselves and the top edge 22 recesses 36, 38 within which the pins 24, 26 of an upper bin 10.1 are respectively received when the bins 10 are in stacked relationship, so as to lock the bins 10 against relative movement in a vertical direction and an operatively forward direction. Naturally, the relative spacing between the hooked members 28, 30 is similar to that of the relative spacing between the pins 24, 26.

The bin 10 further includes lifting formations in the form of two pairs of headed lifting pins, each pair projecting laterally outwardly from one of the side walls 14, 16. Each pair is constituted by a front pin generally indicated by reference numeral 40 and a rear pin generally indicated by reference numeral 42. Each side wall 14, 16 has a beam arrangement generally indicated by reference numeral 54 secured thereto, the beam arrangement being constituted by two relatively short legs 56, 58 extending downwardly from the top edge 22, with lower ends of the legs 56, 58 being interconnected by a beam 60 extending alongside and parallel to the top edge 22. The purpose and the function of the beam arrangement 54 have little or no relevance to this invention and, accordingly, the function and purpose of these beam arrangements are not described further. The front pins 40 and the rear pins 42 are located in general lower corner areas of the beam arrangements 54, more particularly lower ends of the legs 56, 58, and are fast therewith. The pins 40, 42 are thus spaced longitudinally along the length of an upper region of the side walls 14, 16. Here, it is to be appreciated that when the bin 10 does not include the beam arrangements 54, the pins 40, 42 are fast with the side walls 14, 16.

With reference to Figures 2 and 3 of the drawings, a displacing mechanism (shown in broken lines) is generally indicated by reference numeral 68. The displacing mechanism 68 includes two identical flexible coupling members, only one of which is visible and is generally indicated by reference numeral 62, one coupling member 62 being located on each side of the bins 10.1, 10.2 in use. For ease of reference, only one of the flexible coupling members 62 is hereinafter described. The mechanism 68 also includes two arms 66 (only one being visible) and two arm connection formations 64 (also only one being visible and not shown in detail) for connecting the respective members 62 to the respective arms 66. The coupling members 62 also include arm connection formations, also indicated by reference numerals 64, by means of which they are respectively connected to the arm connection formations 64 of the respective arms 16. The displacing mechanism 68 is mounted on a waste disposal vehicle in accordance with the invention, the vehicle being in the form of a truck 70 (shown partially and in broken lines). The truck 70 includes a load bed 90 on which the bins 10.1, 10.2 are received.

The waste disposal vehicle 70 in combination with the bins 10.1, 10.2 forms a waste disposal system in accordance with the invention.

Each coupling member 62 includes two bin connection formations in the form of load engaging lugs 72, 74 which, in side view, are roughly tear-drop shaped. The lugs 72, 74 are provided with apertures, respectively 76, 78. As can be seen in the drawings, the heads 48, 50 of the pins 40, 42 are non-circular when the bin 10 is viewed in side view. The apertures 76, 78 are shaped complementary to the heads of the pins 40, 42 so that the lugs 72, 74 are receivable over the heads 48, 50 when their apertures 76, 78 are in register with the heads 48, 50 and once received over the heads 48, 50 and with the apertures 76, 78 out of register with the heads 48, 50, the lugs 72, 74 are secured to the headed pins 40, 42.

The lugs 72, 74 are connected to the connection formations 64 by means of respectively front chains 80 and rear chains 82 forming part of the flexible coupling members 62. Each rear chain 82 includes a further lug 84 providing a securing aperture 86, in use, to be received over the pin 26 of the upper bin 10.1.

The pins 24, 26 each has a locking formation 27 (only some of which are shown in the drawings), shaped similar, but inverted, to the heads 48, 50 of the pins 40, 42, for locking the lugs 72, 74, 84 on the pins 24, 26 in similar fashion as hereinbefore described. It is to be appreciated, however, that the locking formations 27 may be in any orientation allowing them to be out of register with lugs such as the lugs 72, 74 when such lugs are operatively located on the pins 24, 26.

The two lifting arms 66 of the displacing mechanism 68 are transversely spaced and pivotable about an axis 88 which extends transverse to the load bed 90 and, accordingly, transverse to a length of the truck 70, the axis 88 being located at a rear end of the truck 70. In use, the arms 66 are pivoted by means of hydraulically operated piston and cylinder arrangements 92, also forming part of the displacing mechanism 68, which are pivotally connected to the load bed 90 and to the arms 66. Each of the arms 66 is pivotable between a loading position in which a free end thereof project operatively rearwardly, and a transport position in which its free end projects forwardly.

In use, the bins 10 are placed at a point of use where they are to be filled with waste. Once the bins 10 are filled, they are to be conveyed to a point of discharge, typically a dump site, where the waste is to be discharged from the bins 10.

In accordance with a method of this invention, the arms 66 are pivoted to a rear of the truck, i.e. to their loading positions, and the lugs 72, 74 are hooked on to or secured on to their respective pins 40, 42 as hereinbefore described. Naturally, as mentioned hereinbefore, each of the arms 66 has its own flexible coupling member 62. The arms 66 are now pivoted toward a front of the truck 70, i.e. to their transport positions, thereby to lift the bin 10 to a sufficient height to clear another bin 10. The truck 70 is now manoeuvred so that the suspended or lifted bin 10 is located directly above another bin 10, at which point the suspended bin which will now be the upper bin 10.1 is lowered on to the bin which will now be the lower bin 10.2 in a position where the pins 24, 26 of the upper bin 10.1 rest on the top edge 22 of the lower bin 10.2 so that the pins 24, 26 of the upper bin 10.1 are located operatively rearwardly of the hooked members 28, 30 of the lower bin 10.2.

The lugs 72, 74 are now released from the pins 40, 42 of the upper bin 10.1 and secured on to the pins 40, 42 of the lower bin 10.2. The links 84 of the rear chains 82 are now secured on to the rear pins 26 of the upper bin 10.1. The arms 66 are now pivoted toward a front of the truck 70 causing the longer section 82.1 of the rear chain 82 to become taut. Upon further pivoting of the arms 66 toward the front of the truck 70, the upper bin 10.1 is dragged operatively forwardly so that its pins 24, 26 are received within the recesses 36, 38 defined by the hooked members 28, 30 of the lower bin 10.2, thereby to lock the bins 10.1, 10.2 against relative movement in a vertical direction and locking the upper bin 10.1 against movement relative to the lower bin 10.2 in an operatively forward direction.

Further pivoting of the arms 66 toward the front of the truck 70, causes the front chain 80 to become taut and causes the stacked bins 10.1, 10.2 to be lifted and to be placed on the load bed 90 of the truck 70, as can be seen in Figure 2.

Once on the truck 70, movement of the lower bin 10.1 is restricted by means of retaining formations (not shown) provided on the load bed 90, which retaining formations engage the lower part of the front wall 18 of the bin 10, and by the chains 82.1 which, in this particular position, is taut.

The bin 10 includes a securing formation 94 in the form of a securing bar 96 spaced from and secured to the rear wall 20 by means of two spaced brackets 98. In use, the securing formation 94 is engaged by a hook 102 (Figure 2) fast with the load bed 90 of the truck 70 by means of a chain 104. The purpose of the hook 102 is described hereinafter.

As can be seen in Figure 2, the arms 66 are pivoted toward the front of the truck to a position where the longer portion 82.1 and the shorter portion 82.2 of the rear chain 82 are taut, thereby immovably securing the upper bin 10.1 on to the lower bin 10.2 so that the upper bin 10.1 is secured in a fixed position relative to the load bed 90 of the truck 70. The bins 10.1, 10.2 can now be transported safely to their destination.

As can be seen in the drawings, when stacked, on account of the positioning of the hooked members 28, 30, a centre of the upper bin 10.1 is operatively forward of a centre of the lower bin 10.2 and above that of the lower bin 10.2.

When the bins 10.1, 10.2 are full and they have been transported to a dump site, the waste contained in the bins 10.1, 10.2 can simultaneously be disposed of at the dump site as shown in Figure 3.

Once at the dump site, the arms 66 are pivoted toward a rear of the truck causing the front chain 80 to become taut thereby to lift the stacked bins 10.1, 10.2 off the load bed 90. With the rear end of the lower bin 10.2 still secured to the load bed 90, via the chain 104 forming part of the displacing mechanism 68, by means of the hook 102, the bins 10.1, 10.2 are tipped rearwardly as shown in Figure 3. Sufficient tipping of the bins 10.1, 10.2 thus causes the waste in both bins to be discharged simultaneously. As can be seen in Figure 3, the front chain 80 is slack and the longer portion 82.1 and the shorter portion 82.2 of the rear chain 82 stay taut during the tipping process thus preventing relative movement between the upper bin 10.1 and the lower bin 10.2. Naturally, as will be appreciated, the bins 10.1, 10.2 can both be offloaded from the load bed 90, and can then individually be tipped.

Once the waste has been disposed of, the arms 66 are pivoted back to a front of the truck and the lower bin 10.2 is once again located on the load bed 90 to enable safe transport of the bins 10.1, 10.2 to a point of use.

Arriving at a point of use, the hook 102 is released from its securement to the securing formation 94, and the stacked bins are offloaded from the load bed 90 in similar fashion as hereinabove described for loading of the stacked bins 10.1, 10.2 on to the load bed 90. Once offloaded, on to a substrate on which wheels of the truck 70 are supported, the bins 10.1, 10.2 are, however, still in locked relationship. The lugs 72, 74 are released from the pins 40, 42 and the lugs 84 are released from the pins 26. The lugs 72, 74 are now secured to the pins 40, 42 or to the pin 24 of the upper bin 10.1, the truck 70 is driven slightly rearwardly thereby dragging the upper bin 10.1 rearwardly relative to the lower bin 10.2 thereby undoing the locking of the two bins 10.1, 10.2. The upper bin 10.1 is then lifted sufficiently to clear the lower bin 10.2 whereafter the truck 70 is manoeuvred to a position so that the upper bin 10.1 can be put down next to the lower bin 10.2, or at a position remote from the bin 10.1. Naturally, as will be appreciated, the bins 10.1, 10.2 can, depending on the length of the arms 66, be loaded on to and offloaded from the load bed 90 independently, in particular when the arms 66 are extendible.

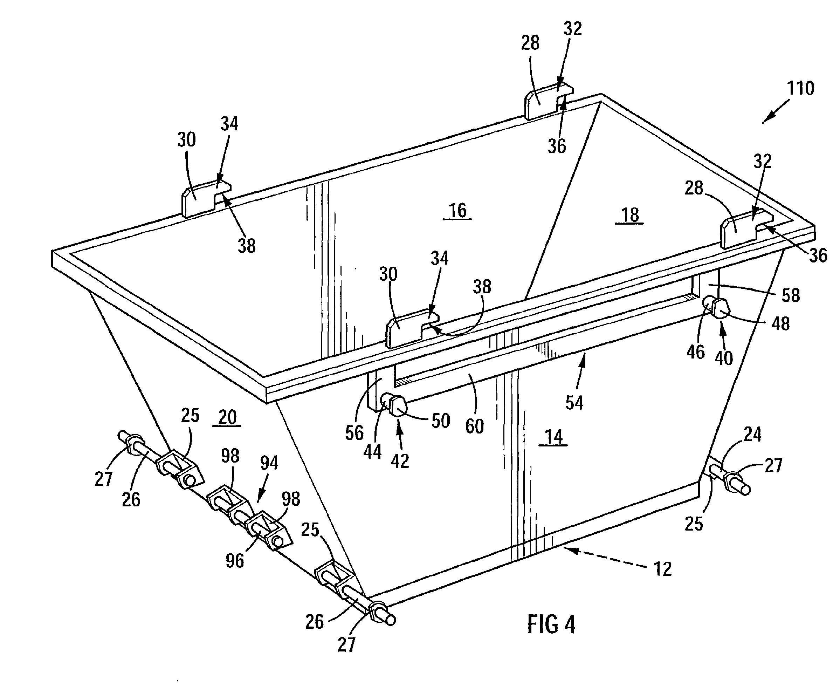

Figure 4 shows a variant embodiment of the bin 10 shown in Figure 1, and the variant embodiment is generally indicated by reference numeral 110. The parts and features of the bin 110 are, unless otherwise indicated, given the same reference numerals as those of the bin 10. The bin 110 is substantially similar to the bin 10, with the exception that the hooked members 28, 30 of the bin 110 face in a direction opposite to those of the bin 10 so that their recesses 36, 38 are accessible from a front end of the bin 110.

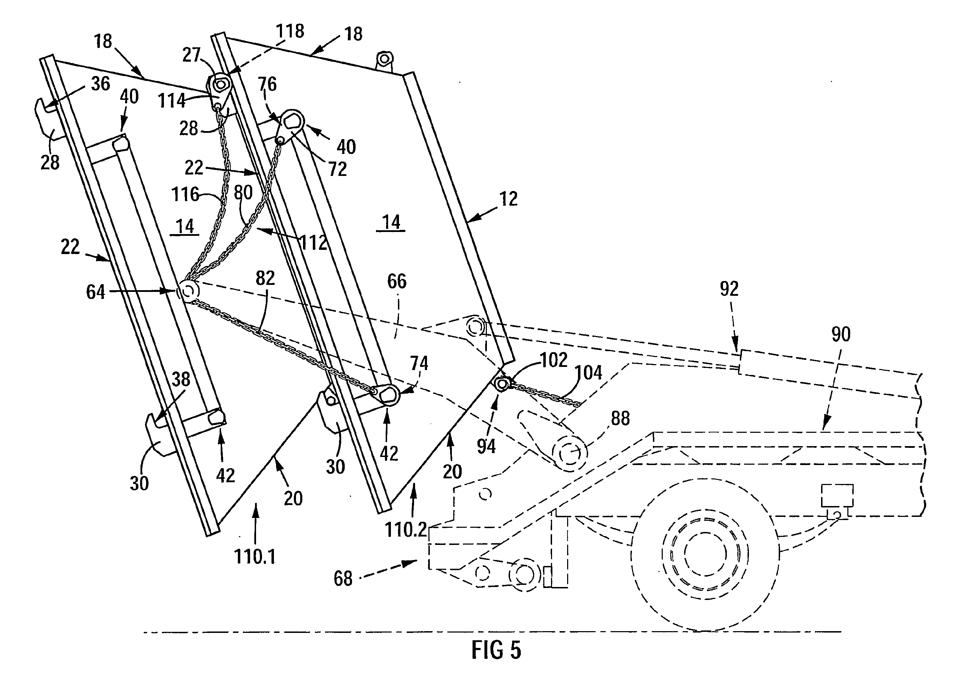

Figure 5 shows a variant embodiment of the flexible coupling member 62, the variant embodiment being indicated by reference numeral 112. Here also, unless otherwise indicated, the parts or features of the coupling member 112 are given the same reference numerals as those of the coupling member 62. The coupling member 112 includes an arm connection formation 64 and two lugs 72, 74 respectively connected to the connection formation 64 by means of a front chain 80 and a one-piece rear chain 82. The coupling member 112, however, includes also a third lug 114 connected to the connection formation 64 by means of a third chain 116, the lug 114 being provided with an aperture 118 similar to those of the lugs 72, 74.

In use, the bins 110.1 and 110.2 are stacked in similar fashion as that hereinabove described, with the exception that the upper bin 110.1 when located on the lower bin 110.2 is positioned so that its pins 24, 26 are operatively in front of the hooked members 28, 30 of the lower bin 110.2. The truck 70 is manoeuvred slightly rearwardly to tighten the front chain 80 thereby dragging the upper bin 110.1 rearwardly causing its pins 24, 26 to be received within the recesses 36, 38. The stacked bins 110.1, 110.2 are loaded on to the load bed 90 of the truck 70 in similar fashion as hereinbefore described.

Once located on the load bed 90, the upper bin 110.1 is immovably fixed relative to the load bed 90 by pivoting the arms 66 towards the front of the truck 70, thereby to tighten the third chain 116 which is connected to the front pin 24 of the top bin 110.1 by means of the third lug 114. The bins 110.1, 110.2 are now ready to be transported safely.

When the bins 110.1, 110.2 are filled with waste, and at a dump site, the waste within the bins 110.1, 110.2 is dumped in similar fashion as hereinabove described. As can be seen in Figure 5, the upper bin 110.1 is, on account of the orientation of the hooked members 28, 30 of the lower bin 110.2 and on account of gravity, locked to the lower bin 110.2 upon tipping of the stacked bins 110.1, 110.2.

As hereinbefore described, the bins 10.1, 10.2 and 110.1, 110.2 are stacked prior to loading thereof on to the load bed 90. It is, however, to be appreciated that when the arms 66 are sufficiently long, or are telescopically extendible arms, the bins can also be stacked only once on the load bed 90, i.e. the lower bin 10.2, 110.2 is loaded on to the load bed 90, and only thereafter is the upper bin 10.1, 110.1 stacked on top of the lower bin 10.2, 110.2.

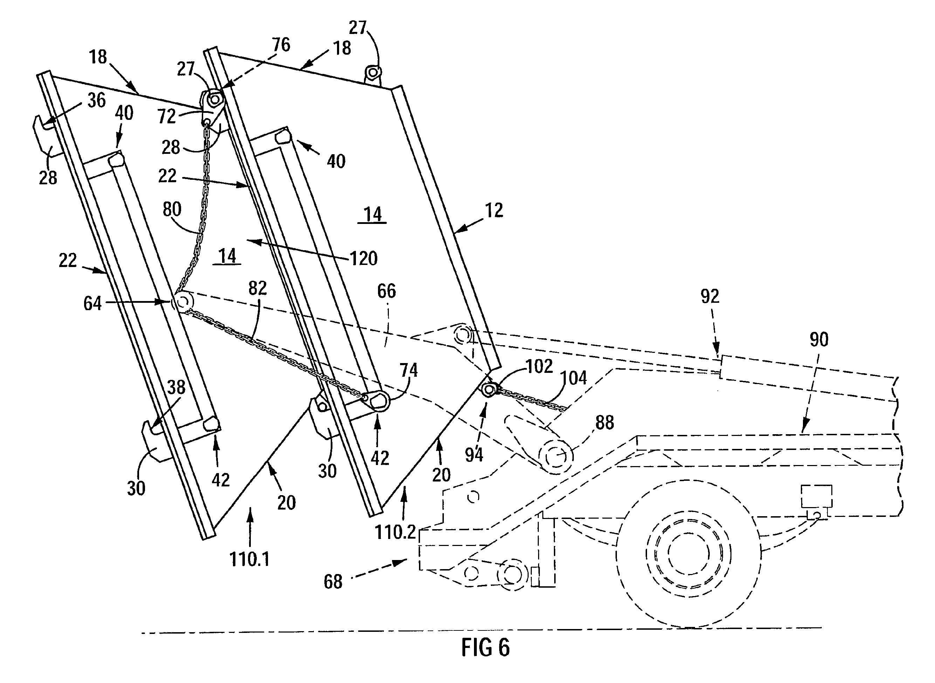

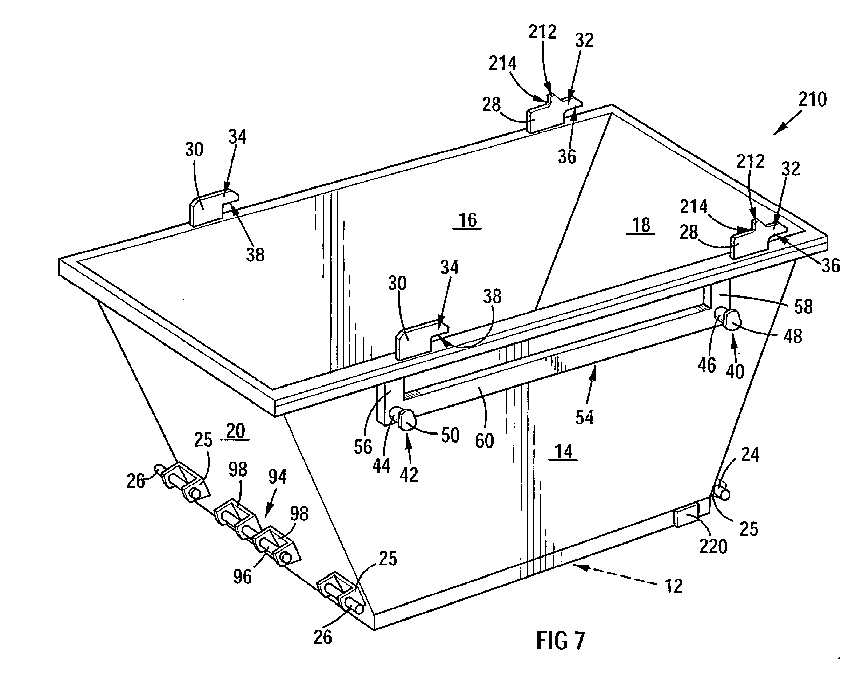

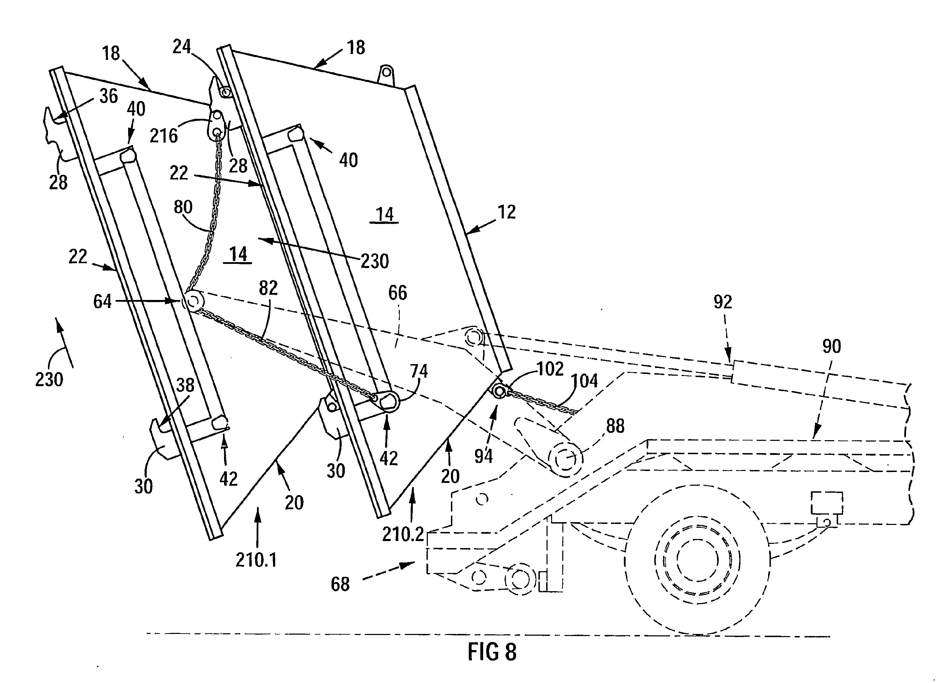

Figure 6 shows an arrangement which, with the exception of the flexible coupling member 112, is identical to that arrangement shown in Figure 5. Here, the flexible coupling is indicated generally by reference numeral 120 and includes only the chains 80, 82 with their respective lugs 72, 74. Here, however, the lug 72 is secured to the pin 24 of the top bin 110.1, whilst the lug 74 is still secured to the pin 42 of the lower bin 110.2. Upon tipping of the stacked bins 110.1, 110.2, as can be seen in Figure 6, the chain 80 becomes slack and the chain 82 becomes taut. In this embodiment, the bins 110.1, 110.2 may further include locking formations (not shown, but see Figures 7 and 8) provided on or close to the hooked members 28 for locking the pins 24 relative to the hooked members 28 to prevent the pins 24 from sliding out of the recesses 36 when the bin 110.1 is moved operatively frontwardly, i.e. in a direction in which it will be unlocked from the lower bin 110.2, relative to the bin 110.2 when tipped, for example when the rear wall 20 of the bin 110.1 pushes against waste discharged from the bins 110.1, 110.2, in particular from the bin 110.2.

Loading and off loading of the bins 110.1, 110.2 of the arrangement shown in Figure 6 takes place in a manner similar as that hereinbefore described.

Figure 7 shows a variant embodiment of the bins 10, 110 shown in Figures 1 and 4, the variant embodiment generally being indicated by reference numeral 210. The parts and features of the bin 210 are, unless otherwise indicated, given the same reference numerals as those of the bins 10, 110.

The locking pins 24, 26 of the bin 210, are somewhat shorter than those of the bins 10, 110, and also do not include the locking formations 27. Also, the brackets 25 by means of which the pins 26 are secured to the rear wall 20 of the bin 210, are spaced so that they project slightly laterally outwardly from the side walls 14, 16 of the bin 210. The brackets 25 by means of which the pins 26 are secured to the front wall 18, on the other hand, are laterally inwardly spaced from the side walls 14, 16. The bin 210 also includes spacers 220 located on the side walls 14, 16 close to the front wall 18 and projecting laterally outwardly from the side walls 14, 16. In use, the brackets 25 which project laterally outwardly from the side walls 14, 16 and the spacers 220 ensure, that when an upper bin 210.1 is received on a lower bin 210.2, the bins are transversely spaced relative to each other, i.e. the brackets 25 and the spacers 220 of the upper bin 210.1 engage inner faces of the side walls 14, 16 of the lower bin 210.2.

The hooked members 28 of the bin 210 are provided with upwardly projecting combs 212 which, together with operatively rear parts of the hooked members 28 define ancillary locking formations 214, the purpose of which will become more apparent hereinafter.

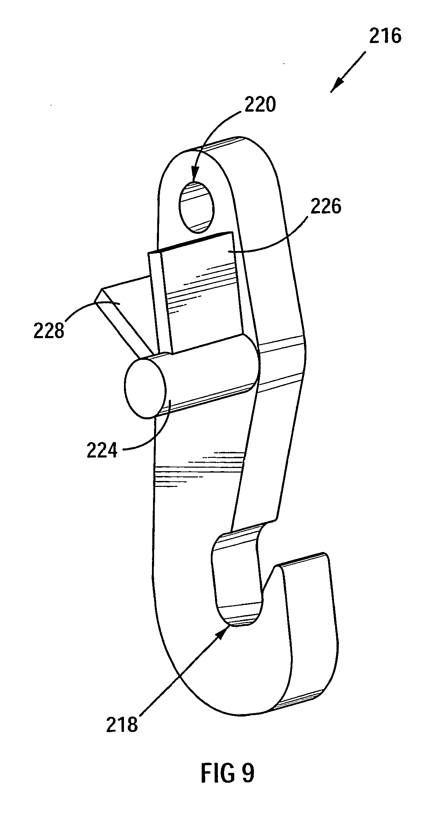

Figure 8 shows an arrangement which, with the exception of the flexible coupling member 120 and the bins 110, is substantially identical to that arrangement shown in Figure 6. Here, the flexible coupling member is generally indicated by reference numeral 230, and includes two chains 80, 82. The flexible coupling member 230 includes an arm coupling formation 64. A connection formation in the form of a hook 216 (see also Figure 9) is secured to a free end of the chain 80, and a connection formation in the form of a lug 74 is secured to a free end of the chain 82. The difference between the flexible coupling member 120 and the flexible coupling member 230 is thus that the lug 72 of the flexible coupling member 120 is replaced with the hook 216 in the flexible coupling member 230. In this embodiment, the chain 80 is slightly shorter than the chain 82. In other embodiments (not shown), the chains 80, 82 can, depending on the particular arrangement, have the same length, or the chain 80 can be longer than the chain 82.

Referring now in particular to Figure 9, the hook 216 defines, adjacent one end thereof, a receiving space 218 for receiving the locking pin 24 of the upper bin 210.1. Adjacent an opposite end thereof, the hook 216 is provided with an aperture 220 by means of which the chain 80 is secured to the hook 216. The hook 216 is further provided with a laterally outwardly projecting locking formation in the form of a pin 224. Connection of the pin 224 to a body of the hook 216 is reinforced by two reinforcement members 226, 228, respectively secured to the body of the hook 216 and to the pin 224. The hook 216 shown in Figure 9 is associated with the side walls 14 of the bins 210.1, 210.2. As will be appreciated, the hook 216 associated with the side walls 16 of the bins 210.1, 210,2 will have its pin 224 projecting from the opposite side of the body of the hook 216 and, accordingly, its reinforcement members 226, 228 will also be located on said opposite side of the body.

In use, the hooks 216 are respectively received between the side walls 14, 16 of the upper bin 210.1 and the hooked members 28 of the lower bin 210.2. The locking pins 24 of the upper bin 210.1 are received in the receiving spaces 218 of the hooks 216. As can be seen in Figure 8, once the hooks 216 are received or hooked on to the locking pins 24 of the upper bin 210.1, the pins 224 are received in and engage the ancillary locking formations 214 of the hooked members 28, thereby locking the upper pin 210.1 against forward movement, i.e. in a direction indicated by arrow 230, relative to the lower bin 210.2. This is particularly important in cases where the bins 210.1, 210.2 are being tipped (Figure 8) and an operatively rear end of the upper bin 210.1 engages waste which has been discharged from the bins 210.1, 210.2 and, on account of such engagement, is forced operatively upwardly.

Loading, tipping and offloading of the bins 210.1, 210.2 of the arrangement shown in Figure 8 takes place in a manner similar to that hereinbefore described with reference to the arrangement shown in Figure 6, except that during loading and offloading of the bins 210.1, 210.2, the hooks 216 are secured to or hooked onto the pins 24 of the upper bin 210.1, as is the case during the tipping of the bins 210.1, 210.2.

In transportation of a conventional bin which is filled with waste, the positioning of the bin on a load bed of a truck causes the weight distribution of the bin and the waste contained in such bin to be unevenly distributed between a front axle and a rear axle or axles of the truck. Typically, most of the weight is carried by the rear axle or axles. Law stipulates permissible maximum loads for front and rear axles of trucks, and, on account of the positioning of the bin on the load bed of the truck, the front axle of such truck is usually loaded to a weight far below its permissible maximum load. The maximum total permissible load to be carried by the truck is thus usually dictated by the maximum permissible load which the rear axle or axles can carry.

It is an advantage of bins in accordance with the invention, that when stacked, on account of the positioning of the hooked members 28, 30 of the bins 10, 110, 210 the centre of the upper bin 10.1, 110.1, 210.1 is located closer to the front of a truck than the centre of the lower bin 10.2, 110.2, 210.2 thereby distributing its weight and the weight of its waste more evenly between the front axle and the rear axle or axles of a truck, thus permitting the truck to carry a greater load whilst staying within its maximum permissible rear axle load.

It is a further advantage of this invention that it permits two filled bins to be simultaneously transported safely and legally to a dump site, thereby, when dumping waste contained in two bins, obviating the need for multiple trips to the dump site, hence resulting in savings in transport costs of filled bins.

## Claims

1. A method of disposing of waste, which includes conveying two bins (10.1, 10.2), both being substantially filled with waste, on a load bed (90) of a vehicle (70) in a stacked manner, so that the bins are arranged one on top of the other, there thus being a lower bin (10.2) and an upper bin (10.1), **characterised in that** the centre of the upper bin (10.1) being positioned between a centre of the lower bin (10.2) and a cab of the vehicle.

2. A method as claimed in Claim 1, which includes the preliminary step of lifting the two bins simultaneously on to the load bed of the vehicle.

3. A method as claimed in Claim 1, which includes the preliminary step of lifting the two bins separately on to the load bed of the vehicle, the lower bin first being lifted on to the load bed of the vehicle, and the upper bin thereafter being lifted on to the lower bin.

4. A method as claimed in Claim 2, which includes the preliminary step of locking the bins together prior to lifting thereof on to the load bed of the vehicle, and the further step of retaining the lower bin in position on the load bed when the bins are on the load bed.

5. A method as claimed in Claim 3, which includes locking the bins together when they have been lifted on to the load bed of the vehicle, and retaining the lower bin in position on the load bed.

6. A method as claimed in Claim 4 or Claim 5, which includes simultaneously tipping the lower bin and the upper bin, while they are stacked one on top of the other, to discharge waste contained therein.

7. A method as claimed in any one of Claim 1 to Claim 5 inclusive, which includes tipping the upper bin to discharge waste contained therein, the lower bin remaining on the load bed.

8. A method as claimed in Claim 1, which includes offloading the bins simultaneously, while they are stacked one on top of the other, from the load bed of the vehicle.

9. A method as claimed in Claim 1, which includes offloading the bins separately from the load bed of the vehicle, the upper bin being offloaded first, and the lower bin being offloaded thereafter.

10. A waste disposal bin, stacked according to the method of Claim 1 on the load bed of a vehicle, which include:
stacking formations for supporting the bin (10.1) on a similar bin (10.2) in a stacked manner; and
locking formations (27, 28) for locking the bin to a similar bin on which it is supported and for resisting relative vertical movement, and relative horizontal movement, in a defined direction, of stacked bins, **characterised in that** the locking formations of respective bins being arranged to engage one another by sliding movement of one bin on another bin below it.

11. A bin as claimed in Claim 10, which includes a first set of locking formations provided adjacent a floor of the bin for locking it to a similar bin that is below it, and a second set of locking formations provided adjacent a top of the bin for locking a similar bin to it that is above it

12. A bin as claimed in Claim 11, in which the stacking formations are provided adjacent the floor of the bin and also perform a locking function, the stacking formations thus providing the first set of locking formations.

13. A bin as claimed in Claim 12, in which the locking formations comprise complementary locking pins and hooked members.

14. A bin as claimed in Claim 13, in which the first set of locking formations is defined by the locking pins, the second set of locking formations being defined by the hooked members, with the locking pins and the hooked members being relatively spaced along a length of the bin such that, when two bins are stacked one on top of the other, a center of an upper one of the bins is longitudinally unaligned with the center of a lower one of the bins.

15. A bin as claimed in Claim 14, in which the locking pins project laterally outwardly from sides of the bin, being movable between extended operative positions and retracted inoperative positions for enabling nesting of one bin in another empty bin, the hooked members projecting upwardly from the top of the bin.

16. A bin as claimed in Claim 15, in which at least some of the hooked members are provided with ancillary locking formations engageable by complementary locking formations of a bin displacing arrangement for resisting relative movement of stacked bins in a direction opposite to the defined direction.

17. A bin as claimed in Claim 16, which includes lifting formations by means of which it can be lifted for loading, unloading and tipping.

18. A bin as claimed in Claim 17, in which the lifting formations are in the form of lifting pins projecting laterally outwardly from sides of the bin.

19. A bin as claimed in any one of Claim 10 to Claim 18 inclusive, which includes spacers adjacent a floor of the bin and projecting laterally outwardly from the bin for engaging another bin on which it is supported, laterally to space the bins relative to each other.

20. A waste disposal vehicle which includes a load bed for receiving two stacked bins, a displacing mechanism including two laterally spaced lifting arms located on sides of the load bed and pivotable about a pivot axis transverse to the load bed, and a coupling member for coupling two bins as claimed in Claim 17, that are stacked one on top of the other, to the displacing mechanism which is pivotable between a loading position in which free ends of the arms project away from a cabin of the vehicle and a transport position in which their free ends project towards the cabin, the coupling member including at least one elongated flexible element arrangement connected to one of the arms so that it defines two limbs, each of the two limbs being provided with a connection formation for connection to the bins, a first of said limbs having a length such that when the bins are on the load bed and its connection formation is secured to the locking pin closest to the cabin of an upper of the two bins, and with the.displacing mechanism in its transport position, said first limb is taut, to retain the upper bin in position relative to a lower bin below it.

21. A vehicle as claimed in Claim 20, in which the connection formation of the first limb is in the form of a hook for hooking on to one of the lifting formations or locking formations of the bins during loading and offloading of the bins on to and from the load bed, and for hooking on to the locking pin closest to the cabin of the upper bin during tipping and transportation of the bins, the hook being provided with a locking formation for engaging the ancillary locking formation of the hooked member associated with the locking pin on to which the hook is hooked, with the connection formation of a second of the limbs being in the form of a lug for connection to one of the lifting formations of the bins during displacement and transport of the bins.

22. A vehicle as claimed in Claim 21, which includes an arm connection formation for connecting the elongated flexible element arrangement to the arm.

23. A vehicle as claimed in any one of Claim 20 to Claim 22 inclusive, in which the elongate flexible element is in the form of two chains connected together by the arm connection formation.

24. A waste disposal system which includes a waste disposal vehicle having a load bed and a pair of bins as claimed in any one of Claim 10 to Claim 19 inclusive stacked thereon.

25. A waste disposal system which includes a waste disposal vehicle as claimed in any one of Claim 20 to Claim 23 inclusive in combination with a plurality of bins, at least one of which is as claimed in Claim 17.

## Patentansprüche

1. Eine Methode zum Beseitigen von Abfall, die einschließt, dass zwei Behälter (10.1, 10.2), beide im Wesentlichen voller Abfall, auf einer Ladefläche (90) eines Fahrzeuges (70) gestapelt befördert werden, derartig, dass sich ein Behälter auf dem anderen befindet, sodass es einen unteren Behälter (10.2) und einen oberen Behälter (10.1) gibt, **gekennzeichnet dadurch, dass** die Mitte des oberen Behälters (10.1) zwischen einer Mitte des unteren Behälters (10.2) und einem Fahrerhaus des Fahrzeuges positioniert ist.

2. Eine Methode, wie in Anspruch 1 beansprucht, welche den ersten Schritt des gleichzeitigen Hebens der zwei Behälter auf die Ladefläche des Fahrzeuges einschließt.

3. Eine Methode, wie in Anspruch 1 beansprucht, welche den ersten Schritt des separaten Hebens der zwei Behälter auf die Ladefläche des Fahrzeuges einschließt, wobei zuerst der untere Behälter auf die Ladefläche des Fahrzeuges gehoben wird und danach der obere Behälter auf den unteren Behälter gehoben wird.

4. Eine Methode, wie in Anspruch 2 beansprucht, die den ersten Schritt, bei dem die Behälter vor ihrem Heben auf die Ladefläche des Fahrzeuges miteinander verriegelt werden, sowie den weiteren Schritt, bei dem der untere Behälter in seiner Position auf der Ladefläche des Fahrzeuges festgehalten wird, wenn sich die Behälter auf der Ladefläche befinden, einschließt.

5. Eine Methode, wie in Anspruch 3 beansprucht, die einschließt, dass die Behälter miteinander verriegelt werden, nachdem sie auf die Ladefläche des Fahrzeuges gehoben worden sind, und dass der untere Behälter in seiner Position auf der Ladefläche festgehalten wird.

6. Eine Methode, wie in Anspruch 4 oder Anspruch 5 beansprucht, die einschließt, dass der untere und der obere Behälter gleichzeitig gekippt werden, während sie aufeinander gestapelt sind, um darin enthaltenen Abfall zu entladen.

7. Eine Methode, wie in einem von Anspruch 1 bis einschließlich Anspruch 5 beansprucht, die einschließt, dass der obere Behälter zum Entladen von darin enthaltenem Abfall gekippt wird und der untere Behälter auf der Ladefläche verbleibt.

8. Eine Methode, wie in Anspruch 1 beansprucht, die einschließt, dass die Behälter gleichzeitig von der Ladefläche des Fahrzeuges ausgeladen werden, während sie aufeinander gestapelt sind.

9. Eine Methode, wie in Anspruch 1 beansprucht, die einschließt, dass die Behälter von der Ladefläche des Fahrzeuges getrennt ausgeladen werden, wobei der obere Behälter zuerst und der untere Behälter danach ausgeladen wird.

10. Ein Abfallbeseitigungsbehälter, der gemäß der in Anspruch 1 genannten Methode auf der Ladefläche eines Fahrzeuges gestapelt ist, einschließlich von:
Stapelstrukturen zum Stützen des Behälters (10.1) auf einem ähnlichen Behälter (10.2) als Stapel
und
Verriegelungsstrukturen (27, 28), um den Behälter mit einem ähnlichen Behälter, auf dem er gestützt wird, zu verriegeln, und zum Standhalten gegen relative vertikale und horizontale Bewegungen in einer definierten Richtung von gestapelten Behältern, **gekennzeichnet dadurch, dass** die Verriegelungsstrukturen der entsprechenden Behälter so angeordnet sind, dass sie durch eine Schiebebewegung eines Behälters auf einem anderen Behälter unter ihm ineinander einrasten.

11. Ein Behälter, wie in Anspruch 10 beansprucht, der einen ersten Satz Verriegelungsstrukturen, die an einem Boden des Behälters bereitgestellt sind, um ihn mit einem ähnlichen Behälter, der sich unter ihm befindet, zu verriegeln, sowie einen zweiten Satz Verriegelungsstrukturen, die an einem Oberteil des Behälters bereitgestellt sind, um ihn mit einem ähnlichen Behälter, der sich darüber befindet, zu verriegeln, einschließt.

12. Ein Behälter, wie in Anspruch 11 beansprucht, bei dem die Stapelstrukturen am Boden des Behälters bereitgestellt sind und auch eine Verriegelungsfunktion haben, wobei die Stapelstrukturen somit den ersten Satz Verriegelungsstrukturen bereitstellen.

13. Ein Behälter, wie in Anspruch 12 beansprucht, bei dem die Verriegelungsstrukturen ergänzende Verriegelungsstifte und Hakenteile beinhalten.

14. Ein Behälter, wie in Anspruch 13 beansprucht, bei welchem der erste Satz Verriegelungsstrukturen durch die Verriegelungsstifte definiert wird, der zweite Satz Verriegelungsstrukturen durch die Hakenteile definiert wird, wobei die Verriegelungsstifte und die Hakenteile entlang einer Länge des Behälters relativ mit Abstand angeordnet sind, sodass, wenn zwei Behälter aufeinander gestapelt sind, eine Mitte eines oberen Behälters der Länge nach nicht mit der Mitte eines unteren Behälters in eine Linie gebracht ist.

15. Ein Behälter, wie in Anspruch 14 beansprucht, bei dem die Verriegelungsstifte seitlich von den Seiten des Behälters nach außen ragen, wobei sie zwischen ausgestreckten operativen Positionen und eingezogenen nichtoperativen Positionen beweglich sind, um das Schachteln von einem Behälter in einem anderen, leeren Behälter zu ermöglichen, wobei die Hakenteile vom Oberteil des Behälters nach oben ragen.

16. Ein Behälter, wie in Anspruch 15 beansprucht, bei dem zumindest einige Hakenteile mit zusätzlichen Verriegelungsstrukturen ausgerüstet sind, die durch komplementäre Verriegelungsstrukturen einer Behälterverlagerungsanordnung eingerastet werden, um relativen Bewegungen von gestapelten Behältern in einer der definierten Richtung entgegengesetzten Richtung entgegen zu wirken.

17. Ein Behälter, wie in Anspruch 16 beansprucht, der Hebestrukturen einschließt, mit welchen er zum Auf- und Abladen und Kippen gehoben werden kann.

18. Ein Behälter, wie in Anspruch 17 beansprucht, bei welchem die Hebestrukturen die Form von Hebestiften haben, die seitlich von den Seiten des Behälters nach außen ragen.

19. Ein Behälter, wie in einem der Ansprüche 10 bis einschließlich 18 beansprucht, der am Boden des Behälters Abstandhalter einschließt, die seitlich von dem Behälter nach außen ragen, um bei einem anderen Behälter, auf dem er gestützt wird, seitlich einzurasten und damit zwischen den einzelnen Behältern einen Abstand zu halten.

20. Ein Abfallbeseitigungs-Fahrzeug, welches Folgendes einschließt: eine Ladefläche zum Aufnehmen zweier gestapelter Behälter, eine Verlagerungsvorrichtung einschließlich zweier seitlich mit Abstand angeordneter Hebearme, die an Seiten der Ladefläche angeordnet und um eine quer zur Ladefläche liegende Drehachse drehbar sind, sowie ein Kupplungsteil, um zwei Behälter, wie in Anspruch 17 beansprucht, die aufeinander gestapelt sind, mit der Verlagerungsvorrichtung, die zwischen einer Ladeposition, bei welcher die freien Armenden von einem Fahrerhaus des Fahrzeuges weg ragen, und einer Transportposition, bei der ihre freien Enden zum Fahrerhaus hinragen, drehbar ist, zu koppeln, wobei das Kupplungsteil mindestens eine längliche bewegliche Elementanordnung einschließt, welche so mit einem der Arme verbunden ist, dass zwei Glieder definiert werden, wobei jedes der zwei Glieder mit einer Verbindungsstruktur zum Verbinden mit den Behältern ausgerüstet ist, wobei ein erstes der genannten Glieder eine solche Länge hat, dass, wenn sich die Behälter auf der Ladefläche befinden und ihre Verbindungsstruktur an dem dem Fahrerhaus am nächsten befindlichen Verriegelungsstift eines oberen Behälters gesichert ist und die Verlagerungsvorrichtung sich in ihrer Transportposition befindet, das genannte erste Glied gespannt ist, um den oberen Behälter relativ zu einem unteren Behälter unter ihm festzuhalten.

21. Ein Fahrzeug, wie in Anspruch 20 beansprucht, bei welchem die Verbindungsstruktur des ersten Gliedes die Form eines Hakens hat, um an einer der Hebestrukturen oder der Verriegelungsstrukturen der Behälter beim Be- und Entladen der Behälter auf die und von der Ladefläche eingehakt zu werden und um während des Transportierens und Kippens der Behälter an dem Verriegelungsstift des oberen Behälters, der dem Fahrerhaus am nächsten ist, eingehakt zu werden, wobei der Haken mit einer Verriegelungsstruktur ausgerüstet ist, um in die zusätzliche Verriegelungsstruktur des Hakenteils, das zu dem Verriegelungsstift gehört, an dem der Haken eingehakt wird, einzuhaken, wobei die Verbindungsstruktur eines zweiten Gliedes die Form einer Lasche hat, um sie mit einer der Hebestrukturen der Behälter während der Verlagerung und des Transports zu verbinden.

22. Ein Fahrzeug, wie in Anspruch 21 beansprucht, welches eine Armverbindungsstruktur einschließt, um die längliche, bewegliche Elementanordnung mit dem Arm zu verbinden.

23. Ein Fahrzeug, wie in einem von Anspruch 20 bis einschließlich Anspruch 22 beansprucht, bei dem das längliche, bewegliche Element die Form von zwei Ketten hat, die durch die Armverbindungsstruktur miteinander verbunden sind.

24. Ein Abfallbeseitigungssystem, welches ein Abfallbeseitigungs-Fahrzeug einschließt, das eine Ladefläche und ein Paar Behälter, wie in einem der Ansprüche 10 bis einschließlich 19 beansprucht, die darauf gestapelt sind, hat.

25. Ein Abfallbeseitigungssystem, welches ein Abfallbeseitigungs-Fahrzeug einschließt, wie in einem der Ansprüche 20 bis einschließlich 23 beansprucht, in Kombination mit mehreren Behältern, von denen mindestens einer dem entspricht, wie unter Anspruch 17 beansprucht.

## Revendications

1. Une méthode d'évacuation des déchets, laquelle inclut le convoyage de deux bennes (10.1, 10.2), toutes deux substantiellement remplies de déchets, sur un plateau de chargement (90) d'un véhicule (70) en superposition, de sorte que les bennes sont arrangées l'une par dessus l'autre, ce qui fait qu'il y a dès lors une benne inférieure (10.2) et une benne supérieure (10.1), **caractérisée en ce que** le centre de la benne supérieure (10.1) est positionné entre un centre de la benne inférieure (10.2) et une cabine du véhicule.

2. Une méthode telle que revendiquée dans la revendication 1, laquelle inclut l'étape préliminaire consistant à lever simultanément les deux bennes pour les placer sur le plateau de chargement du véhicule.

3. Une méthode telle que revendiquée dans la revendication 1, laquelle inclut l'étape préliminaire consistant à lever séparément les deux bennes pour les placer sur le plateau de chargement du véhicule, la benne inférieure étant levée en premier et placée sur le plateau de chargement du véhicule, et la benne supérieure étant levée ensuite et placée sur la benne inférieure.

4. Une méthode telle que revendiquée dans la revendication 2, laquelle inclut l'étape préliminaire consistant à immobiliser les bennes l'une sur l'autre avant de les lever pour les placer sur le plateau de chargement du véhicule, et l'étape supplémentaire consistant à retenir la benne inférieure en position sur le plateau de chargement lorsque les bennes sont sur le plateau de chargement.

5. Une méthode telle que revendiquée dans la revendication 3, laquelle inclut le fait d'immobiliser les bennes l'une sur l'autre une fois qu'elles ont été levées et placées sur le plateau de chargement du véhicule, et de retenir la benne inférieure en position sur le plateau de chargement.

6. Une méthode telle que revendiquée dans la revendication 4 ou la revendication 5, laquelle inclut le fait d'incliner simultanément la benne inférieure et la benne supérieure, alors qu'elles sont superposées l'une par dessus l'autre, afin de déverser les déchets qui y sont contenus.

7. Une méthode telle que revendiquée dans n'importe laquelle des revendications 1 à 5 inclue, laquelle inclut le fait d'incliner la benne supérieure afin de déverser les déchets qui y sont contenus, la benne inférieure restant sur le plateau de chargement.

8. Une méthode telle que revendiquée dans la revendication 1, laquelle inclut le fait de décharger les bennes simultanément, alors qu'elles sont superposées l'une par dessus l'autre, à partir du plateau de chargement du véhicule.

9. Une méthode telle que revendiquée dans la revendication 1, laquelle inclut le fait de décharger les bennes séparément à partir du plateau de chargement du véhicule, la benne supérieure étant déchargée en premier, et la benne inférieure étant déchargée ensuite.

10. Une benne d'évacuation des déchets, superposée conformément à la méthode de la revendication 1 sur le plateau de chargement d'un véhicule, laquelle inclut :
des structures de superposition destinées à faire reposer la benne (10.1) en superposition sur une benne similaire (10.2) ;
et
des structures d'immobilisation (27, 28) destinées à immobiliser la benne sur une benne similaire sur laquelle elle repose et à résister au déplacement vertical relatif, ainsi qu'au déplacement horizontal relatif, dans une direction définie, de bennes superposées, **caractérisée en ce que** les structures d'immobilisation de bennes respectives sont arrangées afin de se mettre en prise l'une avec l'autre grâce au déplacement par glissement d'une benne sur une autre benne se trouvant en dessous.

11. Une benne telle que revendiquée dans la revendication 10, laquelle inclut un premier jeu de structures d'immobilisation prévu adjacent à un plancher de la benne destiné à l'immobiliser sur une benne similaire qui est située en dessous, et un second jeu de structures d'immobilisation prévu adjacent à un sommet de la benne destiné à immobiliser une benne similaire sur celle-ci, laquelle est située au-dessus d'elle.

12. Une benne telle que revendiquée dans la revendication 11, dans laquelle les structures de superposition sont prévues adjacentes au plancher de la benne et accomplissent également une fonction d'immobilisation, les structures de superposition fournissant ainsi le premier jeu de structures d'immobilisation.

13. Une benne telle que revendiquée dans la revendication 12, dans laquelle les structures d'immobilisation comprennent des goupilles d'arrêt et des éléments à crochet complémentaires.

14. Une benne telle que revendiquée dans la revendication 13, dans laquelle le premier jeu de structures d'immobilisation est défini par les goupilles d'arrêt, le second jeu de structures d'immobilisation étant défini par les éléments à crochet, les goupilles d'arrêt et les éléments à crochet étant relativement espacés sur une longueur de la benne de sorte que, lorsque deux bennes sont superposées l'une par dessus l'autre, un centre d'une benne supérieure parmi les bennes est longitudinalement non aligné avec le centre d'une benne inférieure parmi les bennes.

15. Une benne telle que revendiquée dans la revendication 14, dans laquelle les goupilles d'arrêt dépassent latéralement vers l'extérieur à partir des côtés de la benne, et sont déplaçables entre des positions de fonctionnement déployées et des positions de non fonctionnement rétractées afin de permettre l'emboîtement d'une benne dans une autre benne vide, les éléments à crochet dépassant vers le haut à partir du sommet de la benne.

16. Une benne telle que revendiquée dans la revendication 15, dans laquelle au moins certains des éléments à crochet sont munis de structures d'immobilisation auxiliaires avec lesquelles peuvent se mettre en prise des structures d'immobilisation complémentaires d'un arrangement de déplacement de benne afin de résister au déplacement relatif de bennes superposées dans une direction opposée à la direction définie.

17. Une benne telle que revendiquée dans la revendication 16, laquelle inclut des structures de levage au moyen desquelles elle peut être levée pour être chargée, déchargée et inclinée.

18. Une benne telle que revendiquée dans la revendication 17, dans laquelle les structures de levage se présentent sous la forme de goupilles de levage dépassant latéralement vers l'extérieur à partir des côtés de la benne.

19. Une benne telle que revendiquée dans n'importe laquelle des revendications 10 à 18 inclue, laquelle inclut des éléments d'écartement adjacents à un plancher de la benne et dépassant latéralement vers l'extérieur à partir de la benne destinés à se mettre en prise avec une autre benne sur laquelle elle repose, afin d'écarter latéralement les bennes l'une relativement à l'autre.

20. Un véhicule d'évacuation des déchets qui inclut un plateau de chargement destiné à recevoir deux bennes superposées, un mécanisme de déplacement incluant deux bras de levage espacés latéralement situés sur des côtés du plateau de chargement et à même de pivoter autour d'un axe de pivotement transversal au plateau de chargement, et un élément d'accouplement destiné à accoupler deux bennes tel que revendiqué dans la revendication 17, lesquelles sont superposées l'une par dessus l'autre, au mécanisme de déplacement qui est à même de pivoter entre une position de chargement dans laquelle des extrémités libres des bras dépassent dans une direction qui s'éloigne d'une cabine du véhicule et une position de transport dans laquelle leurs extrémités libres dépassent en direction de la cabine, l'élément d'accouplement incluant au moins un arrangement à organe flexible allongé raccordé à l'un des bras de sorte à définir deux branches, chacune des deux branches étant munie d'une structure de raccordement destinée à être raccordée aux bennes, une première desdites branches présentant une longueur telle que lorsque les bennes sont sur le plateau de chargement et que sa structure de raccordement est fixée à la goupille d'arrêt la plus proche de la cabine d'une benne supérieure parmi les deux bennes, et que le mécanisme de déplacement est dans sa position de transport, ladite première branche est tendue, afin de retenir la benne supérieure en position par rapport à une benne inférieure se trouvant en dessous.

21. Un véhicule tel que revendiqué dans la revendication 20, dans lequel la structure de raccordement de la première branche se présente sous la forme d'un crochet destiné à s'accrocher sur l'une des structures de levage ou d'immobilisation des bennes au cours du chargement des bennes sur le plateau de chargement et de leur déchargement de ce même plateau, et destiné à s'accrocher sur la goupille d'arrêt la plus proche de la cabine de la benne supérieure au cours de l'inclinaison et du transport des bennes, le crochet étant muni d'une structure d'immobilisation destinée à se mettre en prise avec la structure d'immobilisation auxiliaire de l'élément à crochet associé à la goupille d'arrêt sur laquelle le crochet est accroché, la structure de raccordement d'une seconde des branches se présentant sous la forme d'un tenon destiné à se raccorder à l'une des structures de levage des bennes au cours du déplacement et du transport des bennes.

22. Un véhicule tel que revendiqué dans la revendication 21, lequel inclut une structure de raccordement de bras destinée à raccorder l'arrangement à organe flexible allongé au bras.

23. Un véhicule tel que revendiqué dans n'importe laquelle des revendications 20 à 22 inclue, dans lequel l'organe flexible allongé se présente sous la forme de deux chaînes raccordées l'une à l'autre par la structure de raccordement de bras.

24. Un système d'évacuation des déchets qui inclut un véhicule d'évacuation des déchets possédant un plateau de chargement et une paire de bennes tel que revendiqué dans n'importe laquelle des revendications 10 à 19 inclue superposées dessus.

25. Un système d'évacuation des déchets qui inclut un véhicule d'évacuation des déchets tel que revendiqué dans n'importe laquelle des revendications 20 à 23 inclue en combinaison avec une pluralité de bennes, dont au moins une est telle que revendiquée dans la revendication 17.
